# EUROPÄISCHE PATENTSCHRIFT

(11) **EP 2 070 806 B1**
(45) Veröffentlichungstag und Bekanntmachung des Hinweises auf die Patenterteilung: **20.03.2013**
(21) Anmeldenummer: 08105979.2
(22) Anmeldetag: 12.12.2008
(51) Int. Cl.: B62D 21/17, B62D 25/06, B62D 33/04, B60H 1/00

(54) **Kofferaufbau mit einem Fahrzeugdach**
Body box with a vehicle roof
Véhicule utilitaire avec un toit de véhicule

(30) Priorität: 13.12.2007 DE 102007060610
(43) Veröffentlichungstag der Anmeldung: 17.06.2009
(73) Patentinhaber: Schmitz Cargobull AG, 48341 Altenberge (DE)
(72) Erfinder: Flacke, Norbert, Dr.-Ing., 45894, Gelsenkirchen (DE); Brinkmann, Bernd, 48727, Billerbeck (DE)
(74) Vertreter: Cohausz & Florack

(56) Entgegenhaltungen:
- EP-A- 0 005 353
- EP-A- 1 630 074
- WO-A-01/54949
- DE-A1- 10 121 012
- DE-A1- 10 158 961
- DE-U1- 20 316 000
- GB-A- 1 198 354

## Beschreibung

Die Erfindung betrifft einen Kofferaufbau eines Kühlfahrzeugs, insbesondere eines Sattelaufliegers, gemäß dem Oberbegriff von Anspruch 1 Das Fahrzeugdach ist dabei nach Art eines Sandwichelements mit einer oberen Decklage, einer unteren Decklage und einer zwischen den Decklagen angeordneten mittleren Kernlage ausgebildet, die aus einem Schaummaterial geschäumt ist.

Der Aufbau eines solchen Fahrzeugdachs ist in allgemeiner Form aus der DE 200 16 610 U1 bekannt. Bei dem bekannten, insbesondere für einen Omnibus oder ein vergleichbares Nutzfahrzeug bestimmten, sandwichartig als einstückiger Monoblock ausgebildeten Fahrzeugdach besteht die mittlere Kernlage beispielsweise aus einem aushärtenden Polyurethan-Schaum, während die obere und die untere Decklage des Fahrzeugdachs jeweils aus einem glasfaserverstärkten Kunststoff hergestellt sein kann. Die Kernlage kann dabei in Form von Platten vorgefertigt sein oder im Nassschaumverfahren zwischen die Decklagen eingebracht werden. In die Kernlage des bekannten Fahrzeugdachs können Nuten oder Bohrungen eingearbeitet sein. Solche in Dächer von Nutzfahrzeugen eingearbeitete Nuten werden im Stand der Technik üblicherweise zum Befestigen von Trennwänden, Stützelementen oder desgleichen verwendet. Durch die in Nutzfahrzeugdächer eingearbeiteten Bohrungen werden dagegen üblicherweise elektrische Kabel gezogen, die beispielsweise für die Versorgung der Innenbeleuchtung des Koffers benötigt werden.

Kofferaufbauten der hier in Rede stehenden Art werden insbesondere für Kühlfahrzeuge verwendet, mit denen verderbliche Ware transportiert wird. Die Wand-, Dach- und Bodenelemente des Kofferaufbaus sind dabei üblicherweise als Sandwichkonstruktion aufgebaut, die aus zwei Decklagen aus Stahlblech, insbesondere nicht ferritischem, amagnetischem Stahlblech, Leichtmetallblech oder einem Kunststoffmaterial und einer zwischen die Decklagen gefüllten Schaumfüllung bestehen, die die Kernlage bildet. Die metallischen Außenlagen schützen dabei die aus Schaum bestehende Kernlage gegen Beschädigungen, während die Kernlage die Wärmeisolation sowie ausreichende Formstabilität und Festigkeit des Sandwichverbundes gewährleistet.

Aus der WO 01/54949 A1 ist es zudem bekannt, dass in die Dachkonstruktion eines Passagierfahrzeugs ein Kanal einbezogen werden kann, welcher für die Heizung, Lüftung und Klimaanlage vorgesehen ist. Dabei bleibt offen, welche Verbindung konkret über den Kanal hergestellt ist. Der betreffende Kanal besitzt allerdings einen rechtwinkligen, großen Querschnitt, was darauf hindeutet, dass es sich um einen Luftkanal handelt, über den gekühlte oder erwärmte Luft zu einem im Dach des Fahrzeugs angeordneten Auslass gefördert wird.

Ein Beispiel für einen Kofferaufbau eines Kühlfahrzeugs ist in der GB 1 198 354 A beschrieben. Bei diesem bekannten Kofferaufbau steht in dem vom Kofferaufbau umschlossenen Innenraum ein Kryogen-Behälter, der durch Rohrleitungen mit einem Wärmetauscher verbunden ist. Dieser Wärmetauscher ist in das Dach des Kofferaufbaus eingelassen. Er wird gespeist durch aus dem Kryogen-Behälter abströmenden flüssigen Stickstoff, der im Wärmetauscher expandiert und dabei ein Kühlmittel kühlt, das die N2- führende Leitung des Wärmetauschers umströmt. Weder der Kryogen-Behälter noch der Wärmetauscher tragen unmittelbar zur Kühlung des Innenraums des Containers bei. Stattdessen strömt das Kühlmittel über an den jeweiligen Innenwandflächen der Seitenwände und des Dachs anliegende Kühlmittelleitungen zu an den Seitenwänden des Containers angeordneten Kühlpaneelen, über die der Atmosphäre des Innenraums des Containers Wärme entzogen wird.

Um im Rahmen der gesetzlichen Vorgaben den für den Innenraum eines Kofferaufbaus zur Verfügung stehenden Raum maximal nutzen zu können, wird das zum Kühlen des Innenraums benötigte Kühlaggregat gemäß einer in der Praxis weit verbreiteten Variante an der dem Zugfahrzeug zugeordneten Stirnseite des Kofferaufbaus angeordnet. Als Alternative zu der stirnseitigen Anordnung sind Lösungen bekannt, bei denen das Kühlaggregat unter dem Boden des Koffers montiert wird.

Unabhängig davon, wo das Kühlaggregat angeordnet wird, erfolgt die Zufuhr der gekühlten Luft in den Innenraum üblicherweise an einer zentralen Stelle des Kofferaufbaus. Zur Unterstützung der Verteilung der gekühlten Luft im Innenraum des Koffers können dort Luftleiteinrichtungen vorgesehen sein.

Die Verteilung der gekühlten Luft im Innenraum eines Kühlfahrzeugs erweist sich allerdings immer dann als problematisch, wenn der Innenraum des Kofferaufbaus entweder durch die zu transportierende Ware oder durch gezielt eingebaute Trennwände in separate Abschnitte unterteilt ist, zwischen denen die gekühlte Luft nicht frei strömen kann.

Um dennoch sicherzustellen, dass auch die über die zentrale Einleitung der gekühlten Luft nicht direkt erreichbaren Abschnitte des Kühlfahrzeuginnenraums ausreichend gekühlt werden, können den betreffenden Abschnitten Sekundär-Kühlstellen zugeordnet werden, die eine gezielte Kühlung des im jeweiligen Abschnitt vorhandenen Luftvolumens vornehmen. Die Sekundär-Kühlstellen werden dabei in der Regel von dem zentralen Kühlaggregat mit dem erforderlichen Kühlmittel gespeist, so dass sie bei minimalem Raumbedarf eine ausreichende Kühlleistung erbringen. So handelt es sich bei den Sekundär-Kühlstellen typischerweise um Verdampfer, in denen ein vom Primär-Kühlaggregat komprimiertes Kühlmittel unter Abkühlung der mit dem Verdampfer in Kontakt kommenden Umgebungsatmosphäre entspannt wird.

Unter dem Begriff »Kühlmittel« sollen sowohl ein verdampfbares Kühlmittel, das durch Aufnahme von Verdampfungswärme in einen gasförmigen Zustand übergeht, als auch eine Kühlsole verstanden werden, die bei der Wärmeaufnahme und Wärmeabgabe in einem flüssigen Zustand verbleibt.

Problematisch ist dabei die Zu- und Rückführung des Kühlmittels zwischen dem Primär-Kühlaggregat und der

Sekundär-Kühlstelle. Die dazu erforderlichen Rohrleitungen müssen einerseits so geschützt sein, dass sie trotz der im praktischen Betrieb auftretenden rauen Betriebsbedingungen sicher nicht beschädigt werden. Andererseits muss insbesondere die vom Primär-Kühlaggregat zur Sekundär-Kühlstelle führende Leitung besonders gut isoliert sein, um einen möglichst minimalen Kälteverlust zu gewährleisten und eine Kondensatbildung an der äußeren Rohrwand zu vermeiden.

Dabei besteht die besondere Herausforderung darin, dass heutzutage noch in großem Umfang eingesetzte Kältemittel in der Regel umweltgefährdend sind, so dass an die Dichtheit des aus Rohrleitungen, Primär-Kühlaggregat und Sekundär-Kühlstelle gebildeten Gesamtsystems höchste Anforderungen gestellt werden. Gleiches gilt für den Fall, dass an Stelle der umweltschädigenden Kältemittel heute verfügbare umweltverträglichere Mittel verwendet werden, da diese in der Regel brennbar sind oder eine toxische Wirkung haben können.

Vor diesem Hintergrund bestand die Aufgabe der Erfindung darin, einen Kofferaufbau für ein Nutzfahrzeug zu schaffen, bei denen bei einfacher Montierbarkeit und geringen Herstellkosten eine einfache und betriebssichere Führung der Verbindungsleitungen zwischen einem Primär-Kühlaggregat und einer Sekundär-Kühlstelle gewährleistet ist.

Die erfindungsgemäße Lösung der oben genannten Aufgabe besteht darin, dass ein Kofferaufbau gemäß Anspruch 1 ausgebildet ist. Vorteilhafte Ausgestaltungen eines erfindungsgemäßen Kofferaufbaus sind in den auf Anspruch 1 rückbezogenen Ansprüchen angegeben.

Der Erfindung liegt der Gedanke zu Grunde, dass in Übereinstimmung mit dem vorbekannten Stand der Technik ein Fahrzeugdach für den erfindungsgemäßen Kofferaufbau eines Kühlfahrzeugs eine obere Decklage, eine untere Decklage und eine zwischen den Decklagen angeordnete mittlere Kernlage aufweist, die aus einem Schaummaterial geschäumt ist, wobei eine Rohrleitung zum Transport von Kühlmittel vorgesehen ist, die von einem ersten Anschluss für ein Primär-Kühlaggregat des Kühlfahrzeugs zu einem zweiten Anschluss führt, an den eine entfernt vom Primär-Kühlaggregat angeordnete Sekundär-Kühlstelle anschließbar ist, wobei die Rohrleitung zwischen den Anschlüssen über ihre gesamte Länge zugangslos in die Kernlage eingeschäumt ist.

Erfindungsgemäß sind nun das Primär-Kühlaggregat und die Sekundär-Kühlstelle über mindestens eine in der mittleren Kernlage des Fahrzeugdachs zugangslos eingeschäumte, zwischen ihren Anschlüssen als kontinuierlicher, fügestellenfreier Strang ausgebildete Rohrleitung miteinander verbunden.

In einem erfindungsgemäßen Fahrzeugdach ist somit die mindestens eine für die. Versorgung der Sekundär-Kühlstelle mit vom Primär-Kühlaggregat zur Verfügung gestellten Kühlmittel benötigte Rohrleitung bereits bei der Anlieferung des Fahrzeugsdachs vorhanden. Die Rohrleitung ist dabei vollständig in den Schaum der Kernlage eingebettet.

Auf diese Weise ist einerseits eine sichere thermische Isolierung der Kühlmittelleitung gewährleistet, ohne dass dazu besondere Maßnahmen, wie beispielsweise besondere Isolationsmaterialien erforderlich sind, die um die jeweilige Rohrleitung gelegt werden müssen. Stattdessen bildet der ohnehin im Hinblick auf eine maximale Wärmeisolation ausgelegte Schaum der Kernlage den Schutz der Rohrleitung gegen einen übermäßigen Kälteverlust des Kältemittels auf dessen Weg vom Primär-Kälteaggregat zur Sekundär-Kühlstelle. So weist ein bei einem erfindungsgemäßen Kofferaufbau vorgesehenes Fahrzeugdach gegenüber konventionellen Fahrzeugdächern, bei denen die Kühlmittelleitung in einem Kanal verläuft, der von außen in das Dach eingeformt ist, insgesamt eine verbesserte Wärmedämmwirkung auf, die sich in einem deutlich besseren K-Wert der bei erfindungsgemäßen Kofferaufbauten vorgesehenen Fahrzeugdächern niederschlägt.

Ein weiterer Vorteil der erfindungsgemäßen Anordnung der Kühlmittelleitung als integraler Bestandteil des Fahrzeugdachs besteht darin, dass das Fahrzeugdach eine maximale Steifigkeit erhält. Insbesondere ist ein bei einem erfindungsgemäßen Kofferaufbau vorgesehenes Fahrzeugdach nicht durch Kanäle oder andere Mittel geschwächt, die beim Stand der Technik benötigt werden, um die Kühlmittelleitung am Fahrzeugdach zu halten.

Eine besonders gute isolierende Wirkung ergibt sich bei einem bei einem erfindungsgemäßen Kofferaufbau vorgesehenen Fahrzeugdach auch dadurch, dass die Rohrleitung zugangslos in dem Fahrzeugdach liegt. Dies erlaubt es, die Rohrleitung so in den Schaum der Kernlage einzubetten, dass sie zumindest gegenüber der Umgebung des jeweiligen Kofferaufbaus, dem das Fahrzeugdach zugeordnet ist, optimal isoliert ist. Indem dabei die Rohrleitung so angeordnet ist, dass sie um ihren Umfang herum jeweils vollständig von Schaum der Kernlage umgeben ist, lässt sich erforderlichenfalls auch gegenüber dem Innenraum des jeweiligen Kofferaufbaus und zur äußeren Umgebung eine thermische Isolierung sichern. Ein weiterer Vorteil der zugangslosen Anordnung im Fahrzeugdach besteht darin, dass keine Kältebrücken entstehen können, die andernfalls im Bereich von Zugängen zu der jeweiligen Rohrleitung entstehen könnten.

Überraschend hat sich in diesem Zusammenhang gezeigt, dass sich auch Kühlmittel führende Rohrleitungen so ausreichend sicher und dauerhaft dicht in das Fahrzeugdach einbetten lassen, dass das Risiko der Entstehung von Leckagen in der Praxis nicht mehr relevant ist. Dies gilt selbst dann, wenn die Rohrleitung aus mehreren Einzelabschnitten zusammengesetzt ist.

Zusätzlich ist dadurch, dass die Rohrleitung erfindungsgemäß im Fahrzeugdach angeordnet und so gegenüber der Umgebung vollständig abgeschottet ist, die Gefahr einer Beschädigung auf ein Minimum reduziert. Insbesondere besteht bei der erfindungsgemäßen Anordnung der Rohrleitung im Schaum der Kernlage des Fahrzeugdachs nicht mehr die Gefahr, dass es beim Be- und Endladen des mit dem Fahrzeugdach ausgestatteten Kofferaufbaus zu einem Zusammenstoß von Ladung und Rohrleitungen kommt.

Mit der Erfindung steht somit ein Kofferaufbau für ein Nutzfahrzeug zur Verfügung, bei dem bei einfacher Montierbarkeit und geringen Herstellkosten eine einfache und betriebssichere Führung der Verbindungsleitungen zwischen einem Primär-Kühlaggregat und einer Sekundär-Kühlstelle gewährleistet ist.

Die Verbindungen zwischen den einzelnen Abschnitten der Rohrleitung lassen sich dabei so im Fahrzeugdach fixieren, dass auch unter ungünstigen Bedingungen ihre Dichtheit gewährleistet ist.

Indem erfindungsgemäß die Rohrleitung zwischen den Anschlüssen als kontinuierlicher, fügestellenfreier Strang ausgebildet ist, ist das Risiko der Entstehung von Undichtheiten minimiert.

Um den Halt der Rohrleitung in dem bei einem erfindungsgemäßen Kofferaufbau vorgesehenen Fahrzeugdach zu sichern, können Abstandhalter vorgesehen sein, die die jeweilige Rohrleitung in einem definierten Abstand zu den Decklagen halten. Vorzugsweise bestehen Abstandhalter aus einem schlecht wärmeleitenden Material, um die Entstehung von Wärmebrücken zu vermeiden. Dazu können Materialien verwendet werden, deren Wärmeleitfähigkeit λ<0,5 W/m.K ist. Die Verwendung von Abstandhalter erweist sich insbesondere dann als zweckmäßig, wenn die Kernlage im Nassschäumverfahren zwischen die Decklagen eingebracht wird, so dass die in die Kernlage jeweils einzubettende Rohrleitung zuvor in dem anschließend von den Kernlage eingenommenen Zwischenraum zwischen den Decklagen positioniert sein muss.

Ein besonders stabiler Aufbau des aus den Decklagen und der Kernlage gebildeten Fahrzeugdach-Sandwichs kann dadurch erreicht werden, dass die Kernlage im Nassschäumverfahren zwischen die Decklagen eingebracht ist. Aufgrund der Verarbeitungseigenschaften der in Frage kommenden Nassschäume eignet sich dieses Verfahren insbesondere zur kostenoptimierten industriellen Serienfertigung. Die Festigkeit und Formsteifigkeit des Fahrzeugdachs kann dabei dadurch zusätzlich unterstützt werden, dass die Kernlage einen monolithischen Schaumblock bildet.

Typischerweise wird für die Kernlage von Fahrzeugdächern der bei einem erfindungsgemäßen Kofferaufbau vorgesehenen Art Polyuhrethanschaum verwendet. Dieser kann in an sich bekannter Weise aus einem flüssig zwischen die Deckplatten eingebrachten Reaktionsgemisch entstehen. Die vorzugsweise verwendeten Polyurethan-Schäume entstehen bei der Polyaddition aus zwei- oder höherwertigen Alkoholen und Isocyanaten als Polymere, wenn Wasser und/oder Karbonsäuren zugegen sind, denn diese reagieren mit den Isocyanaten unter Abspaltung von gasförmigen Kohlendioxid mit Polyolen und Treibgasen aus Chlorfluor-Kohlenstoffen. Im Ergebnis erhält man auf diese Weise Polyurethan Hartschaumstoffe der hier benötigen Art. Es können Katalysatoren, Emulgatoren, Schaumstabilisatoren, Pigmente sowie Halterungs- und Flammschutzmittel beigefügt werden. Auch können dem Schaumkunststoff zur Verbesserung seiner Gebrauchseigenschaften Schaumstabilisatoren, Alterungsschutzmittel und/oder Flammschutzmittel beigemischt sein.

Selbstverständlich ist es möglich, in ein bei einem erfindungsgemäßen Kofferaufbau vorgesehenes Fahrzeugdach nicht nur eine Rohrleitung in erfindungsgemäßer Weise einzubetten, sondern eine, zwei oder mehrere solcher Rohre. Dies kann beispielsweise dann zweckmäßig sein, wenn zur Versorgung der Sekundär-Kühlstelle nicht nur eine Zuleitung, sondern auch eine Rückleitung benötigt wird. Ebenso kann es zweckmäßig sein, in das erfindungsgemäße Fahrzeugdach ein Leerrohr einzulegen, durch das beispielsweise eine Steuerleitung für die Sekundär-Kühlstelle oder eine andere elektrische Versorgungsleitung gelegt werden kann.

Der Anschluss insbesondere der Sekundär-Kühlstelle an die erfindungsgemäß verlegte Rohrleitung kann dadurch vereinfacht werden, dass das Fahrzeugdach eine der Sekundär-Kühlstelle zugeordnete Ausnehmung aufweist, in der mindestens der der Sekundär-Kühlstelle zugeordnete Anschluss der Kühlmittel-Rohrleitung angeordnet ist. Die Ausnehmung kann dabei durch ein Kastenelement gebildet sein, das in das Fahrzeugdach eingelassen ist und eine in Richtung des Innenraums des Kofferaufbaus weisende Öffnung besitzt.

Weiter vereinfacht werden kann das Anschließen des Primär-Kühlaggregats und der Sekundär-Kühlstelle an die jeweilige Rohrleitung auch dadurch, dass das jeweils zugeordnete Ende der Rohrleitung in einem Winkel von 90° ± 30° nach unten, d. h. in Richtung der unteren Decklage, gekrümmt ist. Auf diese Weise kann der am betreffenden Rohrende vorhandene Anschluss bei der Montage vom Monteur besonders leicht erreicht werden.

Die in einem bei einem erfindungsgemäßen Kofferaufbau vorgesehenen Fahrzeugdach vorgesehene Rohrleitung kann aus einem Metallwerkstoff, wie Kupfer oder seinen Legierungen, Aluminium oder seinen Legierungen, aus rostfreiem, blankem oder außenverzinktem Stahl oder aus Kunststoff gebildet sein. Auch ist es möglich, aus einem Metallwerkstoff bestehende Rohrleitungen zu verwenden, die zur Verbesserung ihrer Korrosionsbeständigkeit mit einem Kunststoff oder einer anderen Korrosionsschutzbeschichtung ummantelt sind.

Eine besonders praxisgerechte und gleichzeitig kostengünstig herstellbare Variante eines erfindungsgemäßen Kofferaufbaus ergibt sich dabei dadurch, dass das erfindungsgemäße Fahrzeugdach sich einstückig über die gesamte Länge des Innenraums des Kofferaufbaus erstreckt.

Ein maximale Ausnutzung der Vorteile der Erfindung ergibt sich, wenn der eingeschäumte Anteil der Länge jeder in dem erfindungsgemäßen Fahrzeugdach eingebetteten Rohrleitung das 0,3- bis 0,99-fache der maximal zulässigen "Länge über alles" des jeweiligen Kofferaufbaus beträgt. Dies gilt insbesondere dann, wenn es sich bei dem jeweiligen Nutzfahrzeug um einen Sattelauflieger handelt, der einen sich über seine gesamte Länge erstreckenden erfindungsgemäßen Kofferaufbau trägt.

Nachfolgend wird die Erfindung anhand einer ein Ausführungsbeispiel darstellenden Zeichnung näher erläutert. Es zeigen jeweils schematisch:

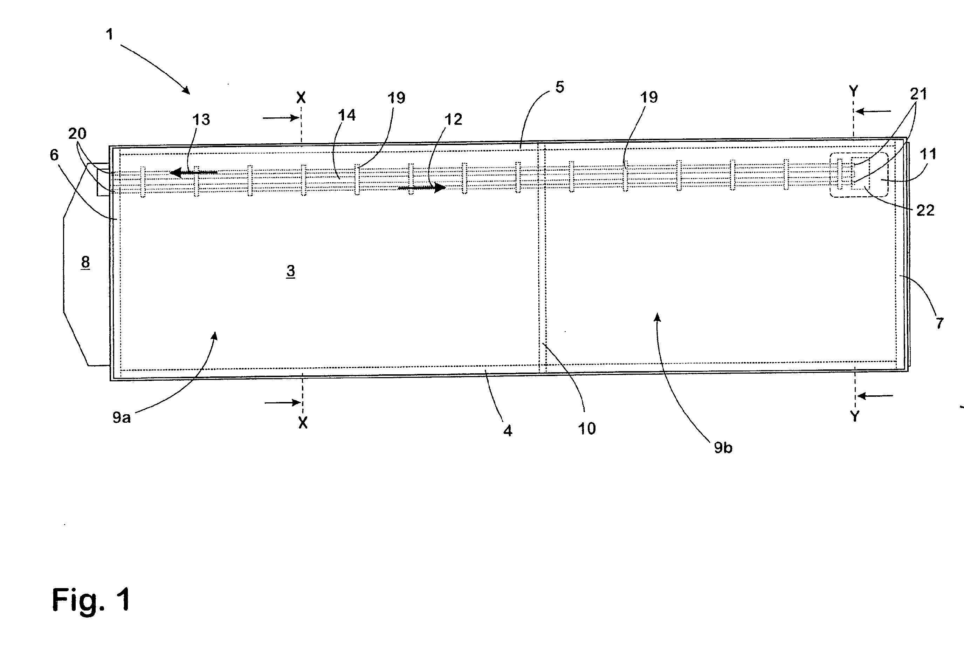

- Fig. 1: einen Kofferaufbau eines Sattelaufliegers in einer Ansicht von oben;
- Fig. 2: den Sattelauflieger in einer seitlichen Ansicht;

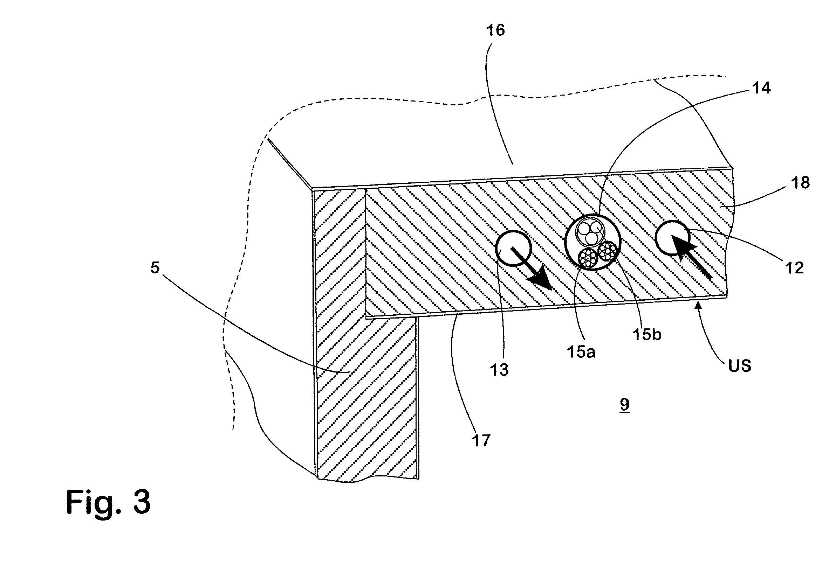

- Fig. 3: einen Ausschnitt des Fahrzeugdachs des Kofferaufbaus gemäß Fig. 1 und 2 in einem Schnitt entlang der in Fig. 1 eingezeichneten Schnittlinie X-X in perspektivischer Ansicht;

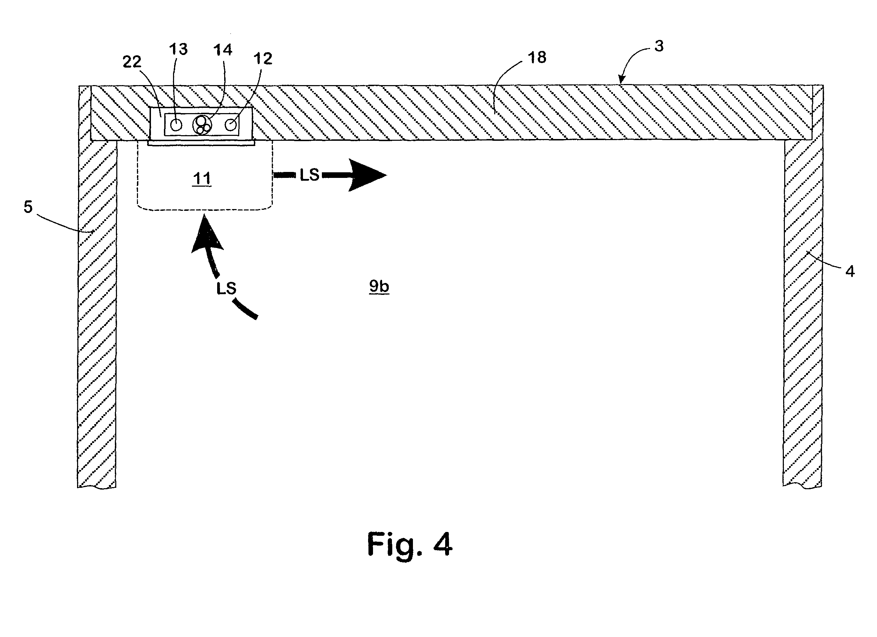

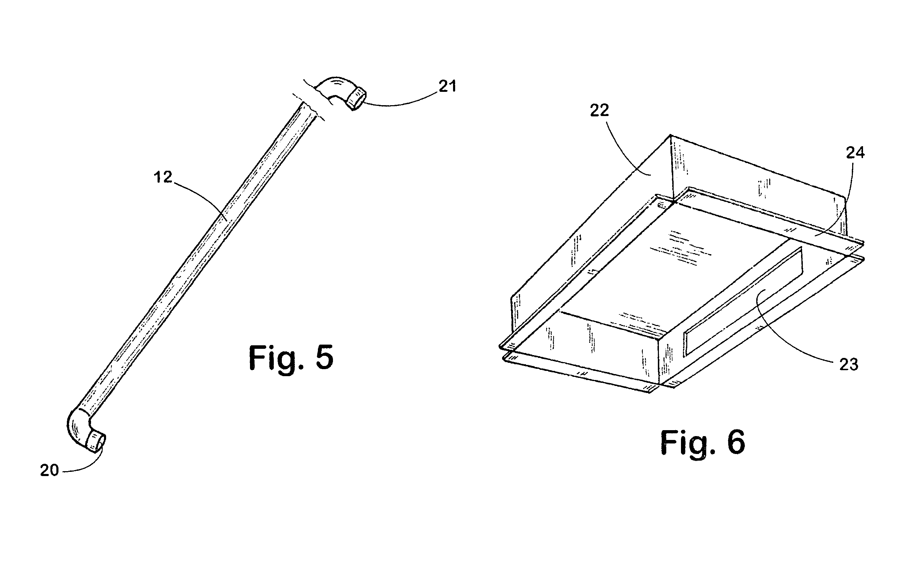

- Fig. 4: das Fahrzeugdach des Kofferaufbaus in einem Schnitt entlang der in Fig. 5 eingezeichneten Schnittlinie Y-Y;
- Fig. 5: eine Rohrleitung für ein Kühlmittel;
- Fig. 6: ein zum Einsatz in das Fahrzeugdach des Kofferaufbaus bestimmtes Kastenelement in perspektivischer Ansicht.

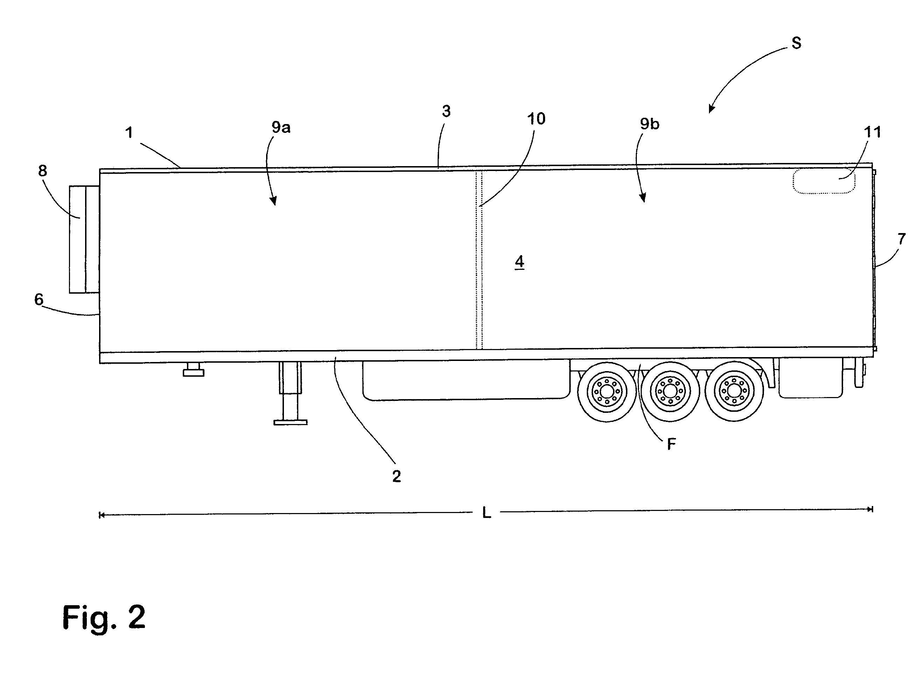

Der quaderförmige Kofferaufbau 1 eines in Fig. 2 nur angedeuteten Sattelaufliegers S ist aus einem sich über die Länge des Kofferaufbaus 1 erstreckenden und auf dem Fahrgestell F des Sattelaufliegers S aufliegenden Bodenelement 2, einem sich ebenfalls über die Länge des Kofferaufbaus 1 erstreckenden Fahrzeugdach 3, zwei das Fahrzeugdach 3 tragenden Längsseitenelementen 4,5, einer an der einen Schmalseite des Bodenelements 2 und des Fahrzeugdachs 3 angeordneten Stirnwand 6 sowie einem an der anderen Schmalseite von Bodenelement 2 und Fahrzeugdach 3 angeordneten Türelement 7 zusammengesetzt.

An der einer hier nicht gezeigten Zugmaschine zugeordneten Stirnwand 6 ist ein handelsübliches Primär-Kälteaggregat 8 befestigt. In dem Primär-Kühlaggregat 8 wird mittels eines hier nicht sichtbaren Verflüssigersatzes, der einen Kompressor und einen Verflüssiger umfasst, eine Kühlflüssigkeit aus dem gasförmigen Zustand verflüssigt und im flüssigen Zustand zu einem hier ebenfalls nicht dargestellten Verdampfer geleitet, in dem es wieder in den gasförmigen Zustand zurückkehrt. Die für diese Zustandsänderung benötigte Wärme wird dabei durch den Verdampfer geblasener Luft entzogen, die entsprechend gekühlt in den vom Kofferaufbau 1 umgebenen Innenraum 9 strömt.

Der Innenraum 9 des Kofferaufbaus 1 ist im vorliegend beschriebenen Ausführungsbeispiel durch eine Trennwand 10 in zwei Kammern 9a,9b geteilt. Durch die Aufteilung in die beiden Kammern 9a,9b sind im Innenraum 9 zwei Kühlzonen gebildet, in denen beispielsweise unterschiedliche Güter unter unterschiedlichen Bedingungen transportiert werden können. Die vom Verdampfer des Primär-Kühlaggregats 8 gekühlte Luft wird dabei in die an die Stirnwand 6 angrenzende Kammer 9a geblasen.

Der zweiten, an das Türelement 7 angrenzenden Kammer 9b des Innenraums 9 ist dagegen eine ebenfalls für diesen Zweck üblicherweise eingesetzte, als handelsüblicher Verdampfer ausgelegte Sekundär-Kühlstelle 11 zugeordnet, die benachbart zum Türelement 7 an der dem Innenraum 9 des Kofferaufbaus 1 zugeordneten Unterseite US des Fahrzeugdachs 3 montiert ist.

Beim hier erläuterten Ausführungsbeispiel sind die Kammern 9a,9b etwa gleich groß. Die Trennwand 10 ist in dem Innenraum 9 jedoch so verstellbar angeordnet, dass durch eine entsprechende Positionierung der Trennwand 10 der Innenraum 9 aber auch in unterschiedlich große Kammern 9a,9b unterteilt werden kann. Ebenso kann die Trennwand 10 vollständig aus dem Innenraum 9 entfernt werden, wenn das gesamte Volumen des Innenraums 9 einheitlich genutzt werden soll. In diesem Fall sichert die Sekundär-Kühlstelle 11 eine besonders gleichmäßige Temperaturverteilung im Innenraum 9, indem Kaltluft nicht nur von der Stirnwand 6 des Kofferaufbaus 1 her in den Innenraum 9 geblasen wird, sondern auch im dem Türelement 7 zugeordneten Abschnitt des Innenraums 9 aktiv kühle Luft erzeugt wird.

Die Sekundär-Kühlstelle 11 verfügt über keinen eigenen Verflüssigersatz (Kompressor und Verflüssiger) zum Verdichten und Verflüssigen des Kältemittels. Stattdessen ist das Primär-Kühlaggregat 8 dazu ausgelegt, die Sekundär-Kühlstelle 11 mit verflüssigtem Kühlmittel zu versorgen. Bei der Sekundär-Kühlstelle 11 handelt es sich beispielsweise um ein zum Primär-Kühlaggregat 8 kompatibles handelsübliches Gerät, das im Wesentlichen aus Verdampfer und Gebläse besteht. Die am hier nicht dargestellten Verdampfer der Sekundär-Kühlstelle 11 durch den ebenfalls nicht sichtbaren Ventilator vorbei geförderte Luftstrom LS wird von unten angesaugt und durch Ventilatoröffnungen im Gehäuse der Sekundär-Kühlstelle 11 in den Abschnitt 9b des Kofferaufbaus 1 geblasen.

Für die Versorgung der Sekundär-Kühlstelle 11 mit flüssigem Kühlmittel ist eine im Fahrzeugdach 3 verlaufende, sich vom Primär-Kühlgerät 8 zur Sekundär-Kühlstelle 11 parallel zu den Längswänden 4,5 erstreckende erste Rohrleitung 12 vorgesehen. Zusätzlich ist im Fahrzeugdach 3 eine zweite parallel zur ersten Rohrleitung 12 von der Sekundär-Kühlstelle 11 zum Primär-Kühlgerät 8 verlaufende Rohrleitung 13 vorgesehen, um das Kühlmittel von der Sekundär-Kühlstelle 11 zum Primär-Kühlgerät 8 zurückzuführen. Darüber hinaus ist im Fahrzeugdach 3 auch noch ein vom Primär-Kühlgerät 8 zur Sekundär-Kühlstelle 11 führendes Leerrohr 14 angeordnet, das zwischen den Rohrleitungen 12,13 positioniert ist.

Unter Berücksichtigung der typischen Abmessungen, die Kofferaufbauten 1 der hier beschriebenen Art in der Praxis haben, haben die Rohrleitungen 12,13 und das Leerrohr 14 in der Praxis eine Länge von 5 - 14 m. Die kürzeren Längen werden beispielsweise dann eingesetzt, wenn die Sekundär-Kühlstelle 11 im mittleren Bereich des Innenraums 9 angeordnet ist, während die große Länge verwendet wird, wenn die Sekundär-Kühlstelle 11 nahe dem Türelement 7 angeordnet ist, wie hier gezeigt.

Die jeweils einstückig als kontinuierlich durchgehender, unterbrechungsfreier und fügestellenfreier Strang ausgebildeten Rohrleitungen 12,13 bestehen beispielsweise aus Kupferrohr. Die zum Zuführen des flüssigen Kühlmittels zur Sekundär-Kühlstelle 11 verwendete Rohrleitung 12 kann dabei einen kleineren Querschnitt aufweisen als die für das Rückführen des dann gasförmigen Kühlmittels zum Primär-Kühlgerät 8 vorgesehene Rohrleitung 13.

Das Leerrohr 14 dagegen kann aus einfachem, für Kabelkanäle und ähnliches üblicherweise verwendetem Kunststoff, beispielsweise ABS-Kunststoff, bestehen. Praktische Erfahrungen zeigen, dass bei Verwendung von ABS-Kunststoffen oder ähnlich festen Materialien für das Leerrohr bei einer Rohrwanddicke von 1,3 - 1,9 mm das Durchbiegen oder Zusammenquetschen sicher verhindert werden kann. Das gilt auch, wenn die Rohrleitungen 12,13 anstelle von einem Metallwerkstoff aus solchem Kunststoff hergestellt sind.

In das Leerrohr 14 sind Steuerleitungen 15 und Versorgungsleitungen 16 eingezogen, die zum Steuern und Versorgen der Sekundär-Kühlstelle 11 sowie hier nicht dargestellter anderer elektrischer Verbraucher genutzt werden können, die im Innenraum 9 des Kofferaufbaus 1 vorhanden sind.

Der der Sekundär-Kühlstelle 11 zugeleitete Kühlmittelstrom ist regelbar, um die Temperatur in der der Sekundär-Kühlstelle 11 zugeordneten Kammer 9b des Kofferaufbaus 1 individuell einstellen zu können.

Anstelle eines verdampfbaren Kühlmittels kann auch eine Kühlsole als Wärme aufnehmendes Agens verwendet werden, wobei das Primär-Kühlaggregat 8 und die Sekundär-Kühlstelle 11 dann entsprechend auszurüsten sind.

Sofern der Innenraum 9 des Kofferaufbaus 1 durch zusätzliche Trennwände 10 in weitere Kammern unterteilt werden soll, kann pro Kammer eine weitere Sekundär-Kühlstelle vorgesehen sein, die jeweils wie die hier gezeigte Sekundär-Kühlstelle 11 vom Primär-Kühlaggregat 8 gespeist wird.

Um eine hohe Kühlleistung und die geforderten tiefen Temperaturen von bis zu -30 °C in den Kammern des Kofferaufbaus stabil aufrecht erhalten zu können, sind die Wände 4,5,6, das Türelement 7 und das Fahrzeugdach 3 jeweils als einstückige, selbsttragende hoch wärmedämmende Sandwich-Konstruktion ausgebildet. Dies gilt insbesondere für das Fahrzeugdach 3.

Dementsprechend weist das Fahrzeugdach 3 eine obere Decklage 16, eine untere Decklage 17 und eine in den zwischen den Decklagen 16,17 vorhandenen Zwischenraum eingebrachte Kernlage 18 auf. Während die Decklagen 16,17 eine geringe Dicke aufweisen und aus kunststoffbeschichtetem Stahl-, GFK- oder Aluminiumplatten bestehen, nimmt die beispielsweise aus einem PU-Schaum geschäumte Kernlage 18 den wesentlichen Teil der Dicke des Fahrzeugdachs 3 ein.

Die Kernlage 18 wird im sogenannten Nassschäumverfahren zwischen den Decklagen 16,17 als monolithischer Schaumblock eingebracht. Der im vorliegend beschriebenen Ausführungsbeispiel als Schaumkunststoff verwendete Polyurethanschaum verfestigt sich, nachdem er in einer entsprechend ausgebildeten, an sich bekannten Vorrichtung als flüssig eingebrachtes Reaktionsgemisch in den zwischen den Decklagen 16,17 vorgesehenen Zwischenraum eingefüllt und aufgeschäumt worden ist.

Wesentlich ist, dass die Kernlage 18 durch Einschäumen von Schaum in den zwischen den Decklagen 16,17 vorhandenen Raum erzeugt worden ist und nicht aus vorgefertigten Schaumblöcken besteht, auf die die Decklagen 16,17 aufgeklebt werden. Dabei können auch andere Einschäumverfahren als das hier beschriebene eingesetzt werden, solange das Einschäumen in situ, d. h. durch Einbringen des Schaums zwischen die Decklagen 16,17, erfolgt.

Das Nasseinschäumen der Kernlage 18 hat den Vorteil, dass auf diese Weise die Rohrleitungen 12,13 und das Leerrohr 14 in erfindungsgemäßer Weise ohne Weiteres vollständig und zugangslos in den Schaum der Kernlage 18 eingebettet werden können. Dazu werden die Rohrleitungen 12,13 und das Leerrohr 15 vor dem Einschäumen der Kernlage 18 mittels Abstandhaltern 19 in den zwischen den Decklagen 16,17 vorhandenen Zwischenraum positioniert.

Die Abstandhalter 19 werden dabei in regelmäßigen Abständen von 1 bis 1,5 m in Längsrichtung der Rohrleitungen 12,13 über die Länge L des Fahrzeugdachs 3 verteilt. Sie weisen jeweils als Durchgangsöffnungen ausgebildete Aufnahmen auf, in denen die Rohrleitungen 12,13 und das Leerrohr 14 formschlüssig gehalten sind. Die Abstandhalter 19 können dabei als Klammern oder Spangen oder jeweils aus zwei Distanzstücken zusammengesetzt sein, deren Höhe jeweils die Lage der Kühlmittelrohrleitungen 12,13 und des Leerrohrs 14 in der Kernlage 15 festlegen. Die Aufnahmen der Abstandhalter 19 können dabei so positioniert sein, dass die innen liegenden Rohrleitungen 12,13 und das Leerrohr 14 in gleichen Abständen beanstandet zu der unteren und oberen Decklage 16,17 gehalten sind. Es kann aber auch zweckmäßig sein, die Rohrleitungen 12,13 und das Leerrohr 14 mit einem größeren Abstand zur dem Innenraum 9 zugeordneten Decklage 17 anzuordnen, um auf diese Weise einen größeren Raum für Abkröpfungen oder Winkelführungen zu erhalten, wenn solche Formelemente an den Rohrleitungen 12,13 oder dem Leerrohr vorgesehen werden, um beispielsweise den Anschluss an das Primär-Kühlaggregat 8 oder die Sekündär-Kühlstelle 11 zu bewerkstelligen.

In jedem Fall sind die Rohrleitungen 12,13 und das Leerrohr 14 jeweils so im Fahrzeugdach 3 geführt, dass sie vollständig von PU-Schaum umgeben sind, so dass ohne besondere zusätzliche Maßnahmen ihre optimale thermische Isolierung gewährleistet ist.

Die Abstandhalter 19 können mit den Decklagen 16,17 verklebt werden und so gestaltet sein, dass sie vom Schaum der Kernlage 15 durchdrungen werden können. Um die Entstehung von Wärmebrücken zu vermeiden, können die Abstandhalter 19 aus schlecht wärmeleitendem Material mit einer Wärmeleitfähigkeit λ<0,5 W/m.K bestehen. Diese Bedingung erfüllende Materialien sind beispielsweise PET (λ < 0,29 W/m.K) oder Polyamid (λ < 0,25 - 0,35 W/m.K).

Die Kühlmittel führenden, vollständig und zugangslos in die Kernlage 15 eingebetteten Rohrleitungen 12,13 sind als kontinuierliche fügestellenfreie Stränge ausgebildet und erstrecken sich jeweils von einem dem Primär-Kühlgerät 8 zugeordneten ersten Anschluss 20 zu einem der Sekundär-Kühlstelle 11 zugeordneten Anschluss 21. Der dem Primär-Kühlgerät 8 zugeordnete Anschluss ist dabei so ausgebildet, dass er über ein geeignetes, hier im Einzelnen nicht gezeigtes Verbindungsstück mit einem Standardversorgungsanschluss des Primär-Kühlgeräts 8 verbunden werden kann.

Der der Sekundär-Kühlstelle 11 zugeordnete Anschluss 21 der Rohrleitungen 12,13 ist in einem oberhalb der Sekundär-Kühlstelle 11 in das Fahrzeugdach 3 eingelassenen Kastenelement 22 positioniert. Ein entsprechendes, hier nicht dargestelltes Kastenelement kann in den der Stirnwand 6 zugeordneten Endabschnitt des Fahrzeugdachs 3 eingelassen sein, um auch dort auf einfache Weise den Anschluss an das Primär-Aggregat 8 zu bewerkstelligen.

Das Kastenelement 22 ist zum Innenraum 9 des Kofferaufbaus 1 offen, so dass die Anschlüsse 21 bei der Montage der Sekundär-Kühlstelle 11 leicht erreicht werden können, und weist in einer Seitenwand einen Schlitz 23 auf, durch den die Anschlüsse 21 der Rohrleitungen 12,13 und die Mündungsöffnung des Leerrohrs 14 geführt sind. An Stelle des Schlitzes 23 können selbstverständlich auch für die Rohrleitungen 12,13 und das Leerrohr 14 jeweils einzelnen Öffnungen vorgesehen sein.

Über einen um seine dem Innenraum 9 zugeordnete Öffnung umlaufenden, auf der unteren Decklage 17 aufliegenden Flansch 24 ist das Kastenelement 22 mit der unteren Decklage verklebt.

Die Anschlüsse 20,21 der beiden Rohrleitungen 12,13 können jeweils um einen Winkel von bis zu 90° gegenüber der Längserstreckung der Rohrleitungen 12,13 gekröpft sein, so dass sie im Kastenelement 22 nach unten in den Innenraum 9 weisen und auf einfache Weise über hier nicht dargestellte Verbindungsmuffen, die ebenfalls im Kastenelement 22 Platz finden, mit der Sekundär-Kühlstelle 11 verbunden werden können.

Insgesamt ergibt sich durch den Einsatz erfindungsgemäß eingeschäumter, zu einer Sekundär-Kühlstelle führender Rohrleitungen eine sehr hohe Wärmeisolation und Effizienz in Bezug auf den Montageaufwand.

### BEZUGSZEICHEN

- 1: Kofferaufbau
- 2: Bodenelement
- 3: Fahrzeugdach des Kofferaufbaus 1
- 4,5: Längsseitenelemente des Kofferaufbaus 1
- 6: Stirnwand des Kofferaufbaus 1
- 7: Türelement des Kofferaufbaus 1
- 8: Primär-Kälteaggregat
- 9: Innenraum des Kofferaufbaus 1
- 10: Trennwand
- 9a,9b: Kammern des Innenraums 9
- 11: Sekundär-Kühlstelle
- 12,13: Rohrleitungen
- 14: Leerrohr
- 15a: Steuerleitungen
- 15b: Versorgungsleitungen
- 16: obere Decklage des Fahrzeugdachs 3
- 17: untere Decklage des Fahrzeugdachs 3
- 18: Kernlage des Fahrzeugdachs 3
- 19: Abstandhalter
- 20: dem Primär-Kühlgerät 8 zugeordneter Anschluss der Rohrleitungen 12,13
- 21: der Sekundär-Kühlstelle 11 zugeordneter Anschluss 21 der Rohrleitungen 12,13
- 22: Kastenelement
- 23: Schlitz
- 24: Flansch
- L: Länge des Fahrzeugdachs 3
- LS: Luftstrom
- F: Fahrgestell des Sattelaufliegers S
- S: Sattelauflieger
- US: Unterseite des Fahrzeugdachs 3

## Patentansprüche

1. Kofferaufbau eines Kühlfahrzeugs, insbesondere eines Sattelaufliegers (S), mit einem Primär-Kühlaggregat (8) zum Kühlen des Innenraums (9) des Kofferaufbaus (1), einer entfernt von dem Primär-Kühlaggregat (8) angeordneten, vom Primär-Kühlaggregat (8) über eine Rohrleitung (12,13) mit Kühlmittel versorgten Sekundär-Kühlstelle (11) und einem Fahrzeugdach (3), mit einer oberen Decklage (16), einer unteren Decklage (17) und einer zwischen den Decklagen (16,17) angeordneten mittleren Kernlage (18), die aus einem Schaummaterial geschäumt ist, das den Innenraum (9) des Kofferaufbaus (1) auf seiner Dachseite abdeckt,
**dadurch gekennzeichnet dass** das Primär-Kühlaggregat (8) mit einem ersten Anschluß die Sekundär Kühlstelle (11) mit einem zweiten Anschluß über mindestens eine in der mittleren Kernlage des Fahrzeugdachs (3) zugangslos eingeschäumte, zwischen ihren Anschlüssen (20,21) als kontinuierlicher, fügestellenfreier Strang ausgebildete Rohrleitung (12,13) miteinander verbunden sind.

2. Kofferaufbau nach Anspruch 1, **dadurch gekennzeichnet, dass** die Kernlage (18) im Nassschäumverfahren zwischen die Decklagen (16,17) eingebracht ist.

3. Kofferaufbau nach Anspruch 2, **dadurch gekennzeichnet, dass** die Kernlage (18) einen monolithischen Schaumblock bildet.

4. Kofferaufbau nach einem der voranstehenden Ansprüche, **dadurch gekennzeichnet, dass** zusätzlich zu der das Kühlmittel führenden Rohrleitung (12,13) ein Leerrohr (14) vorgesehen ist, das endseitig jeweils einen Zugang aufweist und zwischen den Zugängen zugangslos in die Kernlage (18) eingeschäumt ist.

5. Kofferaufbau nach Anspruch 4, **dadurch gekennzeichnet, dass** durch das Leerrohr (14) eine elektrische Leitung (15a,15b) geführt ist.

6. Kofferaufbau nach einem der voranstehenden Ansprüche, **dadurch gekennzeichnet, dass** es eine der Sekundär-Kühlstelle (11) zugeordnete Ausnehmung aufweist, in der mindestens der der Sekundär-Kühlstelle (11) zugeordnete Anschluss der Rohrleitung (12,13) angeordnet ist.

7. Kofferaufbau nach Anspruch 6, **dadurch gekennzeichnet, dass** die Ausnehmung durch ein Kastenelement (22) gebildet ist, das in das Fahrzeugdach (3) eingelassen ist und eine in Richtung des Innenraums (9) des Kofferaufbaus (1) weisende Öffnung besitzt.

8. Kofferaufbau nach einem der voranstehenden Ansprüche, **dadurch gekennzeichnet, dass** Abstandhalter (19) vorgesehen sind, die die jeweilige Rohrleitung (12,13) in einem definierten Abstand zu den Decklagen (16,17) halten.

9. Kofferaufbau nach Anspruch 8, **dadurch gekennzeichnet, dass** die Abstandhalter (19) aus einem schlecht wärmeleitenden Material bestehen.

10. Kofferaufbau nach einem der vorherigen Ansprüche,
**dadurch gekennzeichnet, dass** das Fahrzeugdach (3) sich einstückig über die gesamte Länge (L) des Innenraums (9) des Kofferaufbaus (1) erstreckt.

## Claims

1. Box body of a refrigerated vehicle, in particular of a semitrailer (S), having a primary refrigeration unit (8) for cooling the interior (9) of the box body (1), a secondary refrigeration point (11) arranged remote from the primary refrigeration unit (8) and supplied with coolant through the primary refrigeration unit (8)via a pipeline (12,13), and a vehicle roof (3) having an upper surface layer (16), a lower surface layer (17) and central core layer (18) arranged between the surface layers (16,17), which is foamed from a foam material, which covers the interior (9) of the box body (1) on its roof side, **characterised in that** the primary refrigeration unit (8) having a first connection and the secondary refrigeration point (11) having a second connection are connected to each other via at least one pipeline (12,13) inaccessibly enclosed in foam in the central core layer of the vehicle roof (3) and designed as a continuous rod without joining points between its connections (20,21).

2. Box body according to Claim 1, **characterised in that** the core layer (18) is introduced between the surface layers (16,17) in a wet foam process.

3. Box body according to Claim 2, **characterised in that** the core layer (18) forms a monolithic foam block.

4. Box body according to any one of the preceding claims, **characterised in that** in addition to the pipeline (12,13) conducting the coolant, an empty pipe (14) is provided, which has an access at each end and is inaccessibly enclosed in foam in the core layer (18) between the accesses.

5. Box body according to Claim 4, **characterised in that** an electrical line (15a,15b) is guided through the empty pipe (14).

6. Box body according to any one of the preceding claims, **characterised in that** it comprises a recess associated with the secondary refrigeration point (11), in which recess at least the connection of the pipeline (12,13) associated with the secondary refrigeration point (11) is arranged.

7. Box body according to Claim 6, **characterised in that** the recess is formed by a box member (22), which is formed into the vehicle roof (3) and has an opening pointing in the direction of the interior (9) of the box body (1).

8. Box body according to any one of the preceding claims, **characterised in that** spacers (19) are provided, which maintain the respective pipeline (12,13) at a defined distance to the surface layers (16,17).

9. Box body according to Claim 8, **characterised in that** the spacers (19) consist of a material of poor thermal conductivity.

10. Box body according to any one of the preceding claims, **characterised in that** the vehicle roof (3) extends in one piece over the entire length (L) of the interior (9) of the box body (1).

## Revendications

1. Structure de caisse pour un véhicule automobile, en particulier pour une semi-remorque (S), avec un groupe de refroidissement primaire (8) pour le refroidissement de l'espace intérieur (9) de la structure de caisse (1), un poste de refroidissement secondaire (11), qui, disposé à distance du groupe de refroidissement primaire (8), est approvisionné en agent de refroidissement par ledit groupe de refroidissement primaire (8), par l'intermédiaire d'une conduite tubulaire (12, 13), et un toit de véhicule automobile (3), qui est doté d'une couche superficielle supérieure (16), d'une couche superficielle inférieure (17) et d'un noyau central (18), qui, disposé entre les couches superficielles (16, 17), est formé d'une mousse de matériau alvéolaire, qui recouvre l'espace intérieur (9) de la structure de caisse (1), côté toit, **caractérisée en ce que** le groupe de refroidissement primaire (8), avec un premier raccord, et le poste de refroidissement secondaire (11), avec un deuxième raccord, sont reliés ensemble, par l'intermédiaire d'au moins une conduite tubulaire (12, 13), qui, réalisée sous la forme d'une ligne continue, exempte de joints, est noyée de manière inaccessible dans la mousse du noyau central du toit de véhicule automobile (3), entre ses raccords (20, 21).

2. Structure de caisse selon la revendication 1, **caractérisée en ce que** le noyau (18) est incorporé entre les couches superficielles (16, 17) selon le procédé de moussage par voie humide.

3. Structure de caisse selon la revendication 2, **caractérisée en ce que** le noyau (18) forme un bloc de mousse monolithique.

4. Structure de caisse selon l'une des revendications précédentes, **caractérisée en ce que**, en plus de la conduite tubulaire (12, 13) d'agent de refroidissement, est prévu un tube vide (14), qui est doté à chaque extrémité d'un accès et est noyé de manière inaccessible dans le noyau (18), entre les accès.

5. Structure de caisse selon la revendication 4, **caractérisée en ce qu'**une ligne électrique (15a, 15b) est conduite à travers le tube vide (14).

6. Structure de caisse selon l'une des revendications précédentes, **caractérisée en ce qu'**elle est dotée d'un logement associé au poste de refroidissement secondaire (11), dans lequel est logé au moins le raccord de la conduite tubulaire (12, 13) associée au poste de refroidissement secondaire (11).

7. Structure de caisse selon la revendication 6, **caractérisée en ce que** le logement consiste en un élément en forme de caisson (22), qui est inséré dans le toit de véhicule automobile (3) et est doté d'une ouverture orientée en direction de l'espace intérieur (9) de la structure de caisse (1).

8. Structure de caisse selon l'une des revendications précédentes, **caractérisée en ce que** sont prévus des écarteurs (19), qui maintiennent la conduite tubulaire (12, 13) respective à une distance définie des couches superficielles (16, 17).

9. Structure de caisse selon la revendication 8, **caractérisée en ce que** les écarteurs (19) sont en matière mauvaise conductrice de la chaleur.

10. Structure de caisse selon l'une des revendications précédentes, **caractérisée en ce que** le toit de véhicule automobile (3) s'étend d'une pièce sur toute la longueur (L) de l'espace intérieur (9) de la structure de caisse (1).
